Europäisches Patentamt

European Patent Office

Office européen des brevets

(11) EP 0 737 989 A1

(19)

(12) # DEMANDE DE BREVET EUROPEEN

(43) Date de publication:
**16.10.1996** Bulletin 1996/42

(51) Int Cl.6: **H01F 29/14**, H01F 21/08,
H02M 3/337

(21) Numéro de dépôt: **96400754.6**

(22) Date de dépôt: **05.04.1996**

(84) Etats contractants désignés:
**AT BE CH DE DK ES GB IE IT LI NL PT SE**

(30) Priorité: **11.04.1995 FR 9504327**

(71) Demandeur: **ALCATEL CONVERTERS**
**F-75008 Paris (FR)**

(72) Inventeurs:
• **Sadarnac, Daniel**
**91192 Gif-sur-Yvette Cedex (FR)**

• **D'Almeida, Sylvain**
**91192 Gif-sur-Yvette Cedex (FR)**

(74) Mandataire: **Scheer, Luc et al**
**ALCATEL ALSTHOM,**
**Département de Propriété Industrielle,**
**30, avenue Kléber**
**75116 Paris (FR)**

(54) **Alimentation à découpage employant une inductance saturable pour la réalisation d'une source de courant impulsionnel**

(57)    L'invention concerne notamment une alimentation à découpage comprenant au moins un bras de pont constitué par deux cellules de commutation (10, 11) en série recevant une tension continue (E) à découper. Chaque cellule de commutation (10, 11) comprend un moyen de commutation (T1, T2) en parallèle avec un condensateur (C1, C2) et une diode de protection (D1, D2). Les moyens de commutation (T1, T2) sont alternativement fermés et ouverts pour fournir une tension alternative (e) à une fréquence de découpage appliquée à une charge (31) dont l'une des bornes est raccordée au point commun (P) des cellules de commutation (10, 11), une source de courant impulsionnel (30) comprenant une inductance saturable étant connectée au point commun (P).

Selon l'invention, l'inductance saturable est réalisée à l'aide d'un dispositif comprenant un circuit primaire à deux enroulements et un circuit secondaire constitué par un enroulement unique auquel est connectée une source de courant continu, les enroulements étant bobinés sur un noyau magnétique et les enroulements du circuit primaire étant reliés en parallèle et bobinés en sens opposés, un condensateur étant relié en série avec l'inductance saturable.

FIG. 3

EP 0 737 989 A1

## Description

Le domaine de l'invention est celui des alimentations à découpage et concerne plus précisément une cellule de commutation à tension nulle employant une source de courant impulsionnel comprenant une inductance saturable.

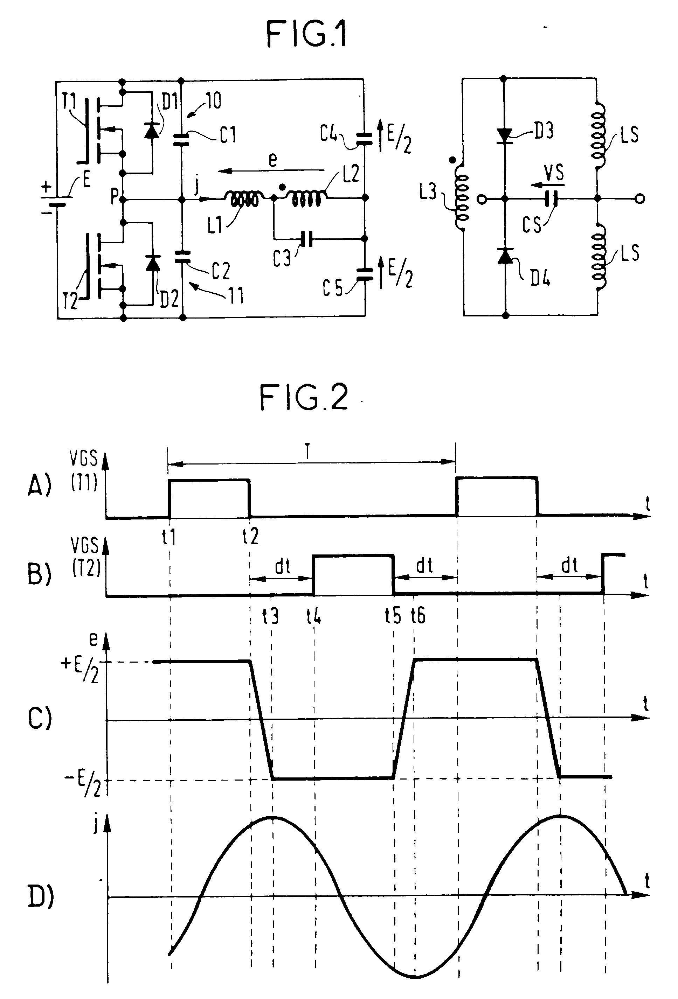

La figure 1 représente une alimentation à découpage classique de type demi-pont. Une alimentation à découpage de ce type est notamment décrite dans l'ouvrage "Les alimentations à fréquence de découpage élevée" de Daniel SADARNAC, ESE 9, Editions Eyrolles, 1993, Collection de la Direction des Etudes et Recherches d'Electricité de France.

Une source de tension fournit une tension continue E à un bras de pont comportant deux cellules de commutation 10, 11 en série. La cellule de commutation 10 comprend, reliés en parallèle, un moyen de commutation T1, une diode de protection D1 et un condensateur C1, alors que la cellule de commutation 11 comprend, également reliés en parallèle, un moyen de commutation T2, une diode de protection D2 et un condensateur C2. Les condensateurs C1 et C2 sont éventuellement compris dans les moyens de commutation T1 et T2 et non rajoutés extérieurement. Le point milieu P du bras de pont représenté est relié à une inductance L1 suivie par une charge, ici constituée par un transformateur d'inductance primaire L2 et d'inductance secondaire L3. Un condensateur C3 est relié en parallèle sur l'inductance primaire L2. L'autre extrémité de la charge constituée par l'inductance L2 est reliée entre deux condensateurs de maintien C4 et C5 auxquels est appliquée la tension continue E.

Au secondaire du transformateur, deux diodes de redressement D3 et D4 coopèrent avec deux inductances LS et un condensateur de lissage CS pour fournir une tension de sortie continue VS qui est appliquée à une charge non représentée.

Le fonctionnement de cette alimentation est décrit en référence à la figure 2 qui représente quatre chronogrammes corrélatifs (A à D) des signaux représentés à la figure 1.

Les moyens de commutation T1 et T2 sont par exemple constitués par des transistors MOSFET de puissance incluant les diodes de protection D1 et D2. Un circuit de commande non représenté applique sur les grilles des transistors T1 et T2 des impulsions de commande représentées aux chronogrammes A et B. Ces impulsions ont une période T et sont décalées dans le temps pour alternativement rendre conducteurs (saturés) et non conducteurs (bloqués) les transistors T1 et T2. Lorsqu'une impulsion est appliquée sur la grille d'un des transistors, celui-ci est rendu conducteur. Une telle impulsion est appliquée au temps t1 au transistor T1, le transistor T2 étant bloqué. La tension e (chronogramme C) mesurée entre le point milieu des condensateurs C4 et C5 et le point milieu du bras de pont est égale à +E/2 qui est la tension présente aux bornes du condensateur C4. Le courant j (chronogramme D) traversant le transistor T1 augmente et est fourni à la charge constituée par l'inductance L1 et par le primaire du transformateur d'inductance L2. Au temps t2, le transistor T1 est rendu bloqué et l'inductance L1 s'oppose aux variations rapides du courant, ce qui provoque la charge du condensateur C1 et la décharge du condensateur C2. La tension e diminue alors jusqu'à atteindre -E/2 au temps t3, où la diode D2 entre en conduction. Le condensateur C2 présente alors une faible tension à ses bornes. Un temps de garde dt est ménagé entre la fin de conduction d'un transistor et le début de conduction de l'autre transistor afin d'éviter que les condensateurs C1 et C2 ne soient brutalement chargés et déchargés. On diminue ainsi les pertes. Lorsque la tension e est devenue négative, le courant j s'inverse et, au temps t4, le transistor T2 est rendu conducteur à son tour. Le phénomène se reproduit alors de façon symétrique.

On génère ainsi une tension e alternative et symétrique qui permet d'obtenir une tension de sortie VS fonction de la période de découpage T.

La capacité des condensateurs C1 et C2 résulte d'un compromis entre les pertes occasionnées et la fréquence de découpage. Si leur capacité est importante, les pertes par commutation diminuent mais la fréquence de découpage doit être relativement faible car il faut plus de temps pour les charger et les décharger. D'autre part, leur présence est indispensable pour permettre une commutation sous faible tension, préférentiellement sous tension nulle, encore appelée commutation douce.

Un inconvénient connu d'une alimentation à découpage de ce type est qu'il est indispensable d'utiliser l'inductance L1 pour permettre de charger et de décharger les condensateurs C1 et C2. Lorsque la charge est constituée par un transformateur, son inductance primaire est en effet trop faible pour pouvoir générer un courant de charge et de décharge des condensateurs suffisant. Aux instants de charge et de décharge de ces condensateurs, le courant j doit être important pour permettre une charge et une décharge rapides. Ainsi, en référence à la figure 2, pendant les périodes t2 à t3 et t5 à t6, le courant j devant être suffisant, il est également important le reste du temps, pendant qu'il circule dans les transistors T1 ou T2 ou dans les diodes D1 ou D2, ce qui entraîne des pertes par conduction et par commutation. Il est dès lors nécessaire de sur-dimensionner ces transistors.

De plus, si l'impédance présentée par la charge alimentée par ce dispositif diminue, il faut néanmoins que le courant j soit présent et suffisamment important aux instants de commutation. En l'absence de charge, les pertes sont donc importantes.

Un autre problème posé par cette inductance L1 est qu'elle est difficile à construire et qu'elle entraîne des pertes fer importantes. Il est en effet nécessaire de la réaliser sous la forme d'un tore pour des raisons de rayonnement électromagnétique et, pour éviter son échauffement, il faut la sur-dimensionner, ce qui pose des problèmes d'encombrement. Dans des applications à fort courant, par exemple pour une alimentation à découpage de 500 W, L1 doit présenter une inductance de l'ordre de quelques μH et capable de supporter 15 A. On considère que la présence de cette inductance entraîne une perte de rendement de l'ordre de 3%. Comme les pertes fer augmentent approximativement en $f^2$, on est également limité en fréquence de découpage qui doit dès lors rester inférieure à 1 MHz.

Par ailleurs, dans le cas de l'alimentation d'une charge variable ou alors si la tension E n'est pas fixe, la tension de sortie VS ne peut être maintenue constante qu'en réalisant un asservissement de la fréquence de découpage. Ceci entraîne un encombrement plus important, un surcoût, et pose des problèmes liés aux rayonnements électromagnétiques.

Une solution connue à ces problèmes est décrite dans la demande de brevet français n°2.717.015 du 3 mars 1994 au nom du même déposant, ici intégrée dans son intégralité par référence. Dans ce document, la source de courant impulsionnel est constituée par un circuit de type LC dimensionné pour que le courant circulant dans le circuit soit en retard de π/2 par rapport à la tension appliquée à la charge, de manière à délivrer des impulsions de courant destinées à charger et décharger alternativement chacun des condensateurs C1 et C2 sur les fronts de la tension alternative.

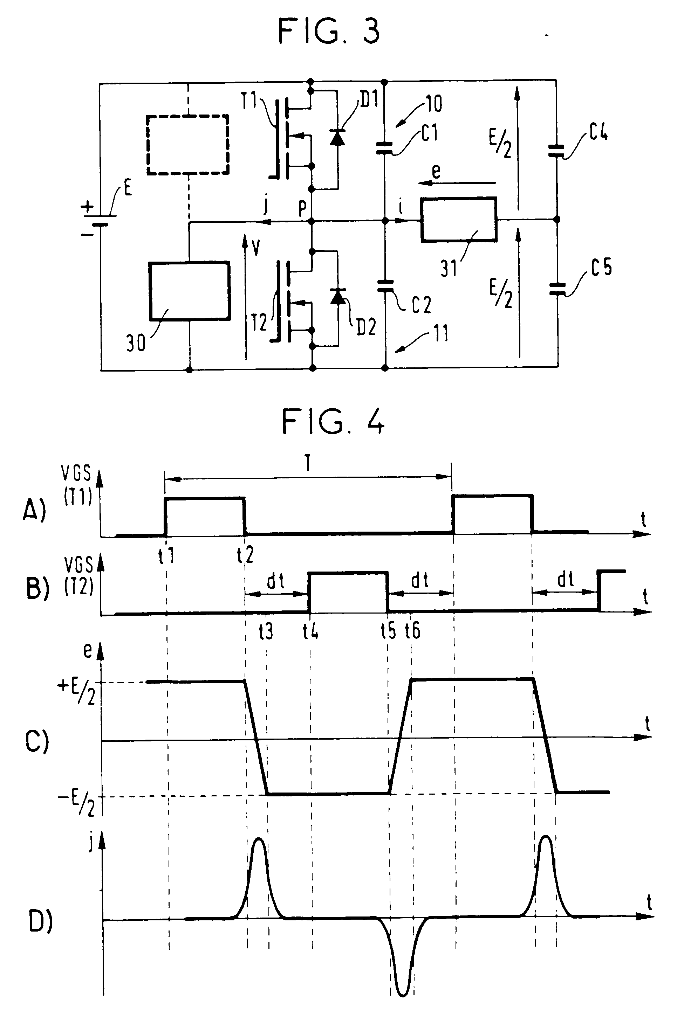

La figure 3 représente un mode de réalisation d'une alimentation à découpage mettant en oeuvre cette source de courant impulsionnel.

Au point milieu P du bras de pont est reliée une source de courant impulsionnel 30 constituée par un circuit de type LC, c'est à dire constitué de selfs et de condensateurs, ce circuit étant dimensionné pour que le courant circulant dans le circuit soit en retard de π/2 par rapport à la tension appliquée à la charge, référencée 31. La source de courant impulsionnel 30 est conçue pour délivrer des impulsions de courant destinées à charger et décharger alternativement chacun des condensateurs C1 et C2 sur les fronts de la tension alternative e. La source de courant impulsionnel 30 est ici reliée en parallèle sur la cellule de commutation 11 mais peut également être reliée en parallèle sur la cellule de commutation 10, comme représenté en traits discontinus. Il est également possible de placer une source de courant impulsionnel aux bornes de chaque cellule de commutation.

Le chronogramme D de la figure 4 montre l'allure du courant j fourni par cette source de courant 30, les autres chronogrammes (A à C) étant identiques à ceux de la figure 2. La fonction de cette source 30 est donc de générer une impulsion de courant aux instants d'ouverture des moyens de commutation. Les impulsions de courant sont centrées sur les fronts montants et descendants de la tension e. Les impulsions de courant sont positives lorsque la tension e diminue et négatives lorsque la tension e augmente.

L'emploi d'un circuit de type LC comme préconisé par cette solution nécessite cependant un câblage important lorsque la source de courant impulsionnel est constituée par un jeu de cellules LC en parallèle, et requiert une précision croissante avec le nombre de ces cellules LC. De plus, l'encombrement présenté n'est pas négligeable lorsque plusieurs cellules LC sont reliées en parallèle, de même que le coût.

Une autre solution aux problèmes précités est décrite dans l'article "A generic soft switching converter topology with a parallel nonlinear network for high power application" de J.A. Ferreira, A. van Ross et J.D. van Wyk, 21ST Annual IEEE Power Electronics Specialists Conference, PESC'90 Record, pages 298-304 et également dans l'article "Pseudo-resonant full bridge DC/DC converter" de O.D. Patterson et D.M. Divan, 18ST Annual Power Electronics Specialists Conference PESC'87 Record, pages 424-430. Cette solution consiste à réaliser la source de courant impulsionnel sous la forme d'un circuit comprenant une inductance saturable.

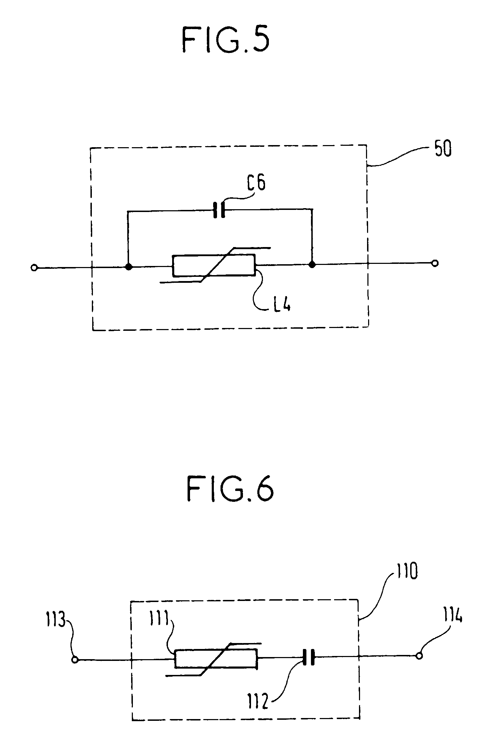

La figure 5 représente une telle source de courant impulsionnel, référencée 50. Une inductance saturable L4 est placée en parallèle avec un condensateur C6. Les bornes de la source de courant impulsionnel 50 peuvent être raccordées aux organes de commutation conformément à la source 30 de la figure 3. La perméabilité de l'inductance L4 diminue lorsque le courant qui lui est appliqué augmente et on obtient ainsi un composant présentant une très faible impédance pour des courants importants. Le condensateur C6 remplit ici la fonction des condensateurs placés aux bornes des moyens de commutation.

Le problème d'une telle source de courant est que les pertes fer sont très importantes car l'intégralité de la caractéristique B = f(H) est parcourue par la variation de courant, B étant l'induction magnétique et H le champ magnétique. Plus précisément, les pertes fer augmentent approximativement à la puissance 2 avec l'induction B. Par ailleurs, le niveau de saturation d'une telle inductance varie avec la température et également d'un ferrite (matériau couramment employé pour sa réalisation) à un autre. Ces différentes dispersions de caractéristiques font qu'une telle inductance ne se prête pas à la réalisation en série d'alimentations à découpage.

La présente invention a notamment pour objectif de remédier à ces inconvénients.

Plus précisément, un des objectifs de l'invention est de fournir une alimentation à découpage employant une inductance saturable présentant peu de pertes.

Cet objectif, ainsi que d'autres qui apparaîtront par la suite, est atteint grâce à une alimentation à découpage comprenant au moins un bras de pont constitué par deux cellules de commutation en série recevant une tension continue à découper, chaque cellule de commutation comprenant un moyen de commutation en parallèle avec un condensateur et une diode de protection, les moyens de commutation étant alternativement fermés et ouverts pour fournir une tension alternative à une fréquence de découpage appliquée à une charge dont l'une des bornes est raccordée au point commun des cellules de commutation, une source de courant impulsionnel comprenant une inductance saturable étant connectée au point commun, l'inductance saturable étant réalisée à l'aide d'un dispositif comprenant un circuit primaire à deux enroulements et un circuit secondaire constitué par un enroulement unique auquel est connectée une source de courant continu, les enroulements étant bobinés sur un noyau magnétique et les enroulements du circuit primaire étant reliés en parallèle et bobinés en sens opposés et un condensateur étant relié en série avec l'inductance saturable.

Dans un autre mode de réalisation, l'inductance saturable est réalisée à l'aide d'un dispositif comprenant un circuit primaire constitué par un premier et un deuxième enroulements et un circuit secondaire constitué par un troisième et un quatrième enroulements, les troisième et quatrième enroulements étant reliés en série et une source de courant continu étant reliée au circuit secondaire, les enroulements étant bobinés sur un noyau magnétique et les premier et deuxième enroulements étant reliés en parallèle et bobinés dans le même sens, les troisième et quatrième enroulements étant bobinés dans des sens opposés et un condensateur étant relié en série avec l'inductance saturable.

Dans un autre mode de réalisation, l'inductance saturable est réalisée à l'aide d'un dispositif comprenant d'une part un circuit primaire constitué par un premier et un deuxième enroulements bobinés dans des sens opposés et reliés en parallèle, et d'autre part un circuit secondaire constitué par un troisième et un quatrième enroulements, les enroulements étant bobinés sur un noyau magnétique, les troisième et quatrième enroulements étant reliés en série et bobinés dans le même sens, une source de courant continu étant reliée au circuit secondaire et un condensateur étant relié en série avec l'inductance saturable.

D'autres caractéristiques et avantages de l'invention apparaîtront à la lecture de la description suivante de plusieurs modes de réalisation, donnés à titre illustratif et non limitatif, et des dessins annexés dans lesquels :

- la figure 1 représente une alimentation à découpage de type connu ;
- la figure 2 représente des chronogrammes corrélatifs relatifs à la figure 1 ;
- la figure 3 représente un mode de réalisation d'une alimentation à découpage mettant en oeuvre une source de courant impulsionnel connue ;
- la figure 4 représente des chronogrammes corrélatifs relatifs à la figure 3 ;
- la figure 5 représente une source de courant impulsionnel réalisée à l'aide d'une inductance saturable ;
- la figure 6 représente une source de courant impulsionnel selon l'invention ;

- la figure 7 représente une inductance saturable pouvant être utilisée pour la réalisation d'une source de courant impulsionnel ;
- la figure 8 est un chronogramme corrélatif permettant de comprendre le fonctionnement de l'inductance de la figure 7 ;
- les figures 9A, 9B et 9C représentent des caractéristiques liées à l'inductance de la figure 7 ;
- la figure 10 représente une autre inductance saturable pouvant être utilisée pour la réalisation d'une source de courant impulsionnel.

Les figures 1 à 5 ont été décrites précédemment en référence à l'état de la technique.

La figure 6 représente une source de courant impulsionnel selon l'invention.

La source de courant impulsionnel, référencée 110, est constituée d'une inductance saturable 111 reliée en série avec un condensateur 112. On peut alors l'utiliser dans un montage tel que représenté à la figure 3 où la source de courant 110 remplace celle référencée 30. Les bornes de connexion sont référencées 113 et 114. Un condensateur peut éventuellement également être relié en parallèle de l'inductance 111.

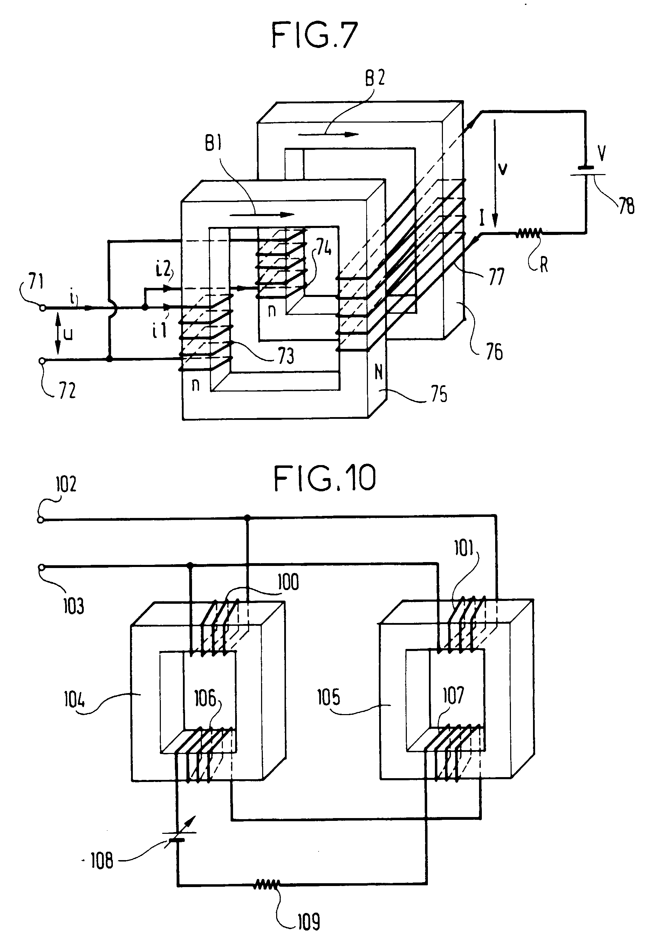

L'inductance saturable 111 est réalisée conformément aux figures 7 ou 10.

La figure 7 représente une inductance saturable pouvant être utilisée pour la réalisation d'une source de courant impulsionnel selon l'invention. Une telle inductance est par exemple décrite dans la demande de brevet européen n°0.608.966.

L'inductance de la figure 7 comporte deux enroulements 73 et 74 reliés en parallèle et bobinés en sens opposés sur deux parties 75 et 76 constituant un circuit magnétique. L'inductance saturable est présentée entre les bornes 71 et 72. L'enroulement 73 est appelé premier enroulement et l'enroulement 74 deuxième enroulement. Le circuit secondaire est constitué par un enroulement unique 77 relié à une source de courant. La source de courant est constituée par une source de tension continue 78 générant une tension V et par une résistance série R. Le courant I généré par cette source parcourt l'enroulement 77 qui est commun aux deux parties 75 et 76 du circuit magnétique. Le circuit magnétique est ici représenté sous forme de deux noyaux distincts mais ils peut également être réalisé sous la forme d'un noyau unique.

Les premier et deuxième enroulements 73 et 74 présentent chacun n tours et, lorsqu'ils sont raccordés à une cellule de commutation, sont parcourus par des courants respectifs $i_1$ et $i_2$, avec $i_1 + i_2 = i$, une tension u étant présente à leurs extrémités. Si l'on pose que les sections des parties 75 et 76 sont identiques et égales à $S = S_1 = S_2$, on a :

$$u = n.S_1 . \frac{dB_1}{dt} \text{ et } -u = n.S_2 . \frac{dB_2}{dt} \qquad (1)$$

La tension v observée au secondaire est alors égale à :

$$v = n.S_1 . \frac{dB_1}{dt} + n.S_2 . \frac{dB_2}{dt} = 0$$

D'après la loi d'Ampère, on a alors :

$$H_1 l_1 = ni_1 + NI \text{ et } H_2 l_2 = -ni_2 + NI$$

avec $l = l_1 = l_2$ la longueur des enroulements 73 et 74 et N le nombre de tours de l'enroulement 77.

La tension u impose l'allure de $B_1$ et $B_2$, les variations de $B_1$ étant symétriques de celles de $B_2$ lorsque les sections $S_1$ et $S_2$ sont identiques.

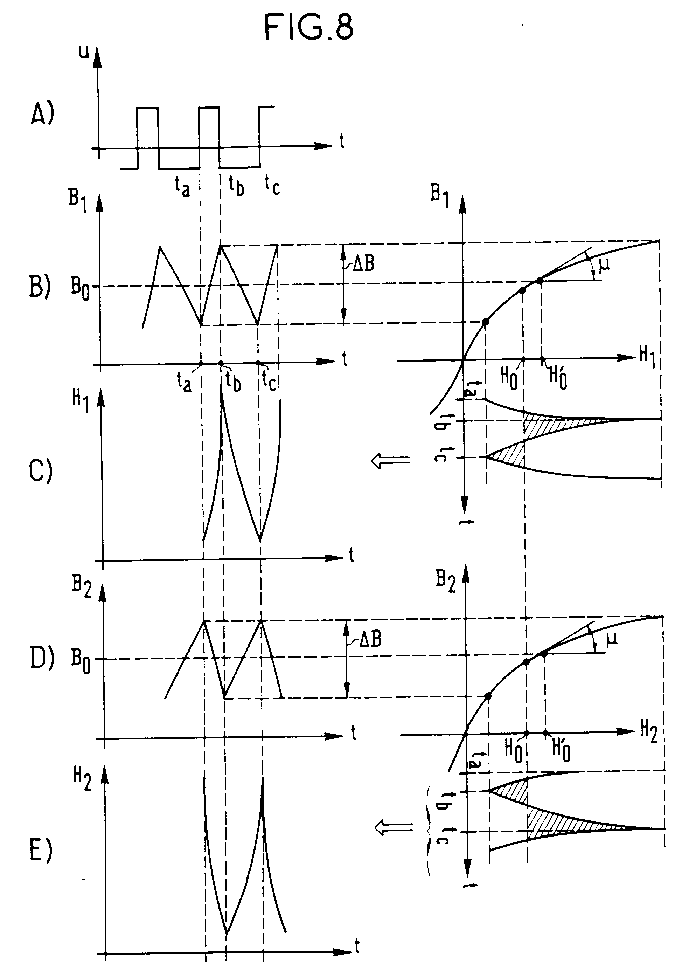

La figure 8 est un chronogramme corrélatif permettant de comprendre le fonctionnement de cette inductance.

Le chronogramme A représente une tension de découpage u rectangulaire de valeur moyenne nulle, le chronogramme B l'évolution de $B_1$ en fonction du temps, le chronogramme C celle de $H_1$ en fonction du temps, le chronogramme D l'évolution de $B_2$ en fonction du temps et le chronogramme E celle de $H_2$ en fonction du temps.

Sur le chronogramme A, la tension u a une valeur moyenne nulle et présente un temps haut entre ta et tb et un temps bas entre tb et tc. L'allure de u impose celle de $B_1$ et $B_2$ représentées aux chronogrammes B et D. Les variations des inductions magnétiques $B_1$ et $B_2$ sont en forme de dents de scie (voir relation 1).

$B_0$ est l'induction moyenne. Les caractéristiques $B_1 = f(H_1)$ et $B_2 = f(H_2)$ sont fonctions du matériau utilisé pour réaliser le noyau magnétique, ce matériau conditionnant également la valeur de la perméabilité magnétique $\mu$ qui est très importante. On peut considérer que les caractéristiques $B_1 = f(H_1)$ et $B_2 = f(H_2)$ sont identiques et, dans ce cas, les ondulations $\Delta B$ d'induction sont symétriques. Dans ce cas, les inductions moyennes de $B_1$ et $B_2$ sont toutes deux égales à $B_0$. On notera que l'on n'a pas $B_0 = f(H_0)$ du fait des non linéarités des courbes $B = f(H)$. On note alors $B_0 = f(H_0')$. Les champs magnétiques $H_1$ et $H_2$ ont la même valeur moyenne $H_0 = NI/l$ lorsque la tension u a une valeur moyenne nulle.

On utilise dans la présente invention un matériau de perméabilité magnétique importante, de sorte que la valeur de $H_0$ soit située bien au-delà du coude de la caractéristique $B = f(H)$, dans une partie non-linéaire de cette caractéristique.

Afin de constater le résultat de la combinaison des inductions $B_1$ et $B_2$, on pose :

$$b_1 = B_1 - B_0$$

$$b_2 = B_2 - B_0$$

$$h_1 = H_1 - H_0'$$

$$h_2 = H_2 - H_0'$$

$$B = b_1 - b_2 = B_1 - B_2$$

$$H = h_1 - h_2 = H_1 - H_2$$

On a alors $2.u = n.S.\frac{dB}{dt}$ et $H.l = n(i_1 + i_2) = n.i$

On obtient ainsi l'inductance de la figure 7.

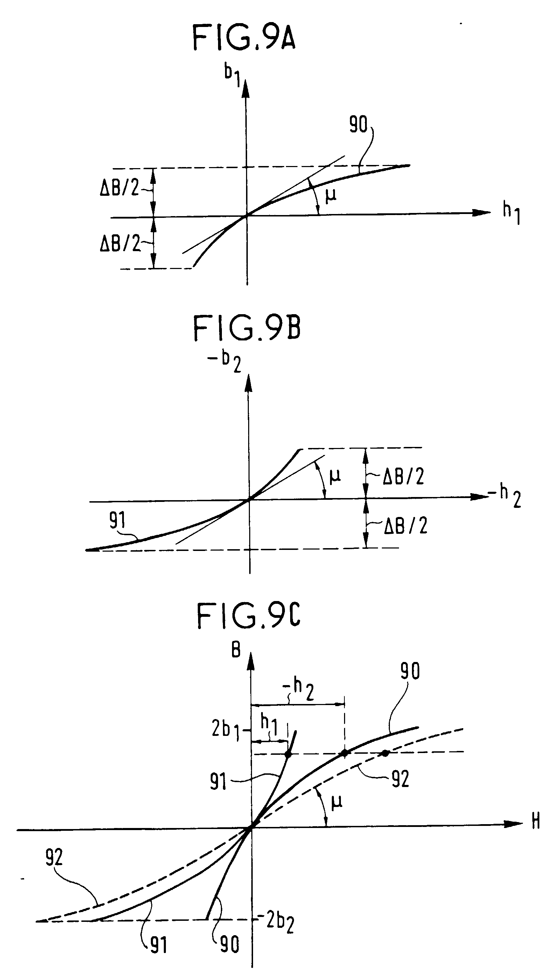

Les figures 9A et 9B représentent les inductions magnétiques $b_1$ et $-b_2$ en fonction de $h_1$ et $-h_2$ respectivement et la figure 9C la combinaison de ces caractéristiques résultant de la mise en parallèle des enroulements (bobinés dans des sens différents) constituant le primaire de l'inductance de la figure 7.

A tout instant, on a $b_1 = -b_2$, $B = b_1 - b_2 = 2b_1 - 2b_2$ et $H = h_1 - h_2$. On obtient la caractéristique $B = f(H)$ de la figure 9C, référencée 92, par construction géométrique point par point en superposant les caractéristiques 90 et 91 des figures 9A et 9B. La courbe 92 correspond celle obtenue pour l'inductance variable de la figure 7. La valeur de $\mu$ est réglable par $H_0$ et donc par la valeur du courant I qui peut être aisément ajusté à l'aide de la résistance R ou de la tension V en fonction du résultat visé.

On obtient donc une inductance saturable dont le réglage s'effectue par simple modification du courant I. De plus, comme les composantes alternatives d'induction se compensent, la tension v du secondaire est nulle. L'isolation entre le circuit primaire et le circuit secondaire ne pose alors aucun problème particulier.

Le matériau utilisé pour réaliser les circuits magnétiques peut être un ferrite, un matériau amorphe, ou encore un alliage fer-silicium. D'autres matériaux peuvent être employés, l'essentiel étant qu'ils présentent une perméabilité $\mu$ importante.

L'intégralité de la caractéristique $B = f(H)$ n'est pas parcourue par la variation de courant et les pertes fer sont donc minimes.

La figure 10 représente une autre inductance saturable pouvant être utilisée pour la réalisation d'une source de courant impulsionnel. Ce mode de réalisation nécessite cependant une isolation importante entre le primaire et le secondaire et entre les spires du secondaire.

Dans ce mode de réalisation, le circuit primaire est constitué par un premier 100 et un deuxième enroulements 101 reliés en parallèle, les enroulements étant ici bobinés dans le même sens. L'inductance saturable est présentée entre les bornes 102 et 103. Chacun des enroulements du circuit primaire est bobiné sur un noyau différent 104, 105. Le circuit secondaire est constitué par un troisième 106 et un quatrième 107 enroulements, ces enroulements étant reliés en série et bobinés dans des sens opposés sur les noyaux 104 et 105. De même que préalablement, une source de courant continu schématisée sous la forme d'une source de tension 108 suivie par une résistance 109 est reliée au circuit secondaire.

Afin de limiter le courant continu dans le circuit secondaire, on emploie un nombre de spires important au secondaire. Une tension élevée y est alors induite, ce qui nécessite un système d'isolement performant.

Une variante de ce mode de réalisation consiste à bobiner les premier et deuxième enroulements dans des sens opposés et à bobiner les troisième et quatrième enroulements dans le même sens. On obtient alors le même fonctionnement de l'inductance saturable.

Le condensateur 112 (Fig.6) en série avec l'inductance saturable a pour fonction de supprimer les composantes continues et donc de symétriser les impulsions positives et négatives.

La source de courant impulsionnel peut être en parallèle avec au moins une des cellules de commutation 10, 11 ou alors, comme mentionné dans la demande de brevet n°94.02462 précitée, une des bornes de la source de courant impulsionnel peut être raccordée au point milieu P et l'autre de ses bornes entre deux condensateurs en série auxquels est appliquée la tension continue E.

## Revendications

1. Alimentation à découpage comprenant au moins un bras de pont constitué par deux cellules de commutation (10, 11) en série recevant une tension continue (E) à découper, chaque cellule de commutation (10, 11) comprenant un moyen de commutation (T1, T2) en parallèle avec un condensateur (C1, C2) et une diode de protection (D1, D2), lesdits moyens de commutation (T1, T2) étant alternativement fermés et ouverts pour fournir une tension alternative (e) à une fréquence de découpage appliquée à une charge (31) dont l'une des bornes est raccordée au point commun (P) desdites cellules de commutation (10, 11), une source de courant impulsionnel (110) comprenant une inductance saturable (111) étant connectée audit point commun (P), caractérisée en ce que ladite inductance saturable (111) est réalisée à l'aide d'un dispositif comprenant un circuit primaire à deux enroulements (73, 74) et un circuit secondaire constitué par un enroulement unique (77) auquel est connectée une source de courant continu (R, 78), lesdits enroulements (73, 74, 77) étant bobinés sur un noyau magnétique (75, 76) et lesdits enroulements (73, 74) dudit circuit primaire étant reliés en parallèle et bobinés en sens opposés,

et en ce qu'un condensateur (112) est relié en série avec ladite inductance saturable (111).

2. Alimentation à découpage comprenant au moins un bras de pont constitué par deux cellules de commutation (10, 11) en série recevant une tension continue (E) à découper, chaque cellule de commutation (10, 11) comprenant un moyen de commutation (T1, T2) en parallèle avec un condensateur (C1, C2) et une diode de protection (D1, D2), lesdits moyens de commutation (T1, T2) étant alternativement fermés et ouverts pour fournir une tension alternative (e) à une fréquence de découpage appliquée à une charge (31) dont l'une des bornes est raccordée au point commun (P) desdites cellules de commutation (10, 11), une source de courant impulsionnel (110) comprenant une inductance saturable (111) étant connectée audit point commun (P), caractérisée en ce que ladite inductance saturable (111) est réalisée à l'aide d'un dispositif comprenant un circuit primaire constitué par un premier (100) et un deuxième enroulements (101) et un circuit secondaire constitué par un troisième (106) et un quatrième enroulements (107), lesdits troisième et quatrième enroulements (106, 107) étant reliés en série et une source de courant continu (108, 109) étant reliée audit circuit secondaire, lesdits enroulements étant bobinés sur un noyau magnétique (104, 105) et lesdits premier et deuxième enroulements (100, 101) étant reliés en parallèle et bobinés dans le même sens, lesdits troisième et quatrième enroulements (106, 107) étant bobinés dans des sens opposés, et en ce qu'un condensateur (112) est relié en série avec ladite inductance saturable (111).

3. Alimentation à découpage comprenant au moins un bras de pont constitué par deux cellules de commutation (10, 11) en série recevant une tension continue (E) à découper, chaque cellule de commutation (10, 11) comprenant un moyen de commutation (T1, T2) en parallèle avec un condensateur (C1, C2) et une diode de protection (D1, D2), lesdits moyens de commutation (T1, T2) étant alternativement fermés et ouverts pour fournir une tension alternative (e) à une fréquence de découpage appliquée à une charge (31) dont l'une des bornes est raccordée au point commun (P) desdites cellules de commutation (10, 11), une source de courant impulsionnel (110) comprenant une inductance saturable (111) étant connectée audit point commun (P), caractérisée en ce que ladite inductance saturable (111) est réalisée à l'aide d'un dispositif comprenant d'une part un circuit primaire constitué par un premier et un deuxième enroulements bobinés dans des sens opposés et reliés en parallèle, et d'autre part un circuit secondaire constitué par un troisième et un quatrième enroulements, lesdits enroulements étant bobinés sur un noyau magnétique, lesdits troisième et quatrième enroulements étant reliés en série et bobinés dans le même sens, une source de courant continu étant reliée audit circuit secondaire, et en ce qu'un condensateur (112) est relié en série avec ladite inductance saturable (111).

4. Alimentation à découpage selon l'une des revendications 1 à 3, caractérisée en ce que ladite source de courant impulsionnel (110) est en parallèle d'au moins une desdites cellules de commutation (10, 11).

5. Alimentation à découpage selon l'une des revendications 1 à 3, caractérisée en ce qu'une des bornes (113; 114) de ladite source de courant impulsionnel (110) est raccordée audit point milieu (P) et en ce que l'autre borne (114; 113) est raccordée entre deux condensateurs en série auxquels est appliquée ladite tension continue (E).

# FIG.1

# FIG.2

# FIG. 3

# FIG. 4

# FIG.5

# FIG.6

# FIG.7

# FIG.10

# FIG.8

# FIG.9A

# FIG.9B

# FIG.9C

Office européen
des brevets

**RAPPORT DE RECHERCHE EUROPEENNE**

Numero de la demande

EP 96 40 0754

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,Y | PROCEEDINGS OF THE ANNUAL POWER ELECTRONICS SPECIALISTS CONFERENCE (PESC), SAN ANTONIO, JUNE 11 - 14, 1990, vol. 1, 11 Juin 1990, INSTITUTE OF ELECTRICAL AND ELECTRONICS ENGINEERS, pages 298-304, XP000173920 FERREIRA J A ET AL: "A GENERIC SOFT SWITCHING CONVERTER TOPOLOGY WITH A PARALLEL NONLINEAR NETWORK FOR HIGH POWER APPLICATION" * le document en entier * --- | 1,3 | H01F29/14 H01F21/08 H02M3/337 |
| Y | EP-A-0 608 966 (UNIV WESTERN AUSTRALIA ;MAGELLAN TECH PTY LTD (AU)) 3 Août 1994 * figures 5,8 * --- | 1,3 | |
| A | DE-C-625 976 (SIEMENS) 11 Juin 1932 * figure 1 * --- | 2 | |
| A | FR-A-1 011 769 (OFFICE NATIONAL D'ATUDES E DE RECHERCHES AARONAUTIQUES) 7 Juillet 1952 * figure 2 * --- | 1-3 | DOMAINES TECHNIQUES RECHERCHES (Int.Cl.6) H01F H02M |
| A | APEC '94 NINTH ANNUAL APPLIED POWER ELECTRONICS CONFERENCE, 13 Février 1994, ORLANDO, US, pages 143-149, XP000467312 CHO: "Novel full bridge zero-voltage-transition PWM DC/DC converter for high power applications" * figure 8 * ----- | 1 | |

Le présent rapport a été établi pour toutes les revendications

| Lieu de la recherche | Date d'achèvement de la recherche | Examinateur |
|---|---|---|
| LA HAYE | 5 Juillet 1996 | Gentili, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)